# FASCICULE DE BREVET EUROPEEN

(11) **EP 0 664 246 B1**
(45) Date de publication et mention de la délivrance du brevet: **15.10.1997**
(21) Numéro de dépôt: 95100613.9
(22) Date de dépôt: 18.01.1995
(51) Int. Cl.: B60S 1/34

(54) **Essuie-glace de véhicule automobile**
Scheibenwischer für Kraftfahrzeug
Windscreen-wiper for vehicle

(30) Priorité: 21.01.1994 FR 9400819
(43) Date de publication de la demande: 26.07.1995
(73) Titulaire: VALEO SYSTEMES D'ESSUYAGE, 78180 Montigny-Le-Bretonneux (FR)
(72) Inventeur: Bouy, Gilbert, F-86100 Chatellerault (FR)
(74) Mandataire: Gamonal, Didier

(56) Documents cités:
- DE-A- 3 448 060
- DE-A- 3 842 954
- FR-A- 2 624 077
- PATENT ABSTRACTS OF JAPAN vol. 10 no. 200 (M-498) [2256] ,12 Juillet 1986 & JP-A-61 044059 (NISSAN) 3 Mars 1986,

## Description

La présente invention concerne un essuie-glace de véhicule automobile.

L'invention concerne plus particulièrement un essuie-glace du type comportant un bras d'essuie-glace monté articulé sur une tête d'entraînement par l'intermédiaire d'un axe sensiblement perpendiculaire à la direction longitudinale du bras d'essuie-glace autour duquel il peut pivoter entre une position basse d'essuyage et une position haute de repos, permettant notamment de procéder à une intervention sur le balai d'essuie-glace et notamment au remplacement de la raclette d'essuyage, et du type comportant une béquille de soutien du bras d'essuie-glace en position haute dont une extrémité est montée articulée sur la tête d'entraînement autour d'un axe parallèle à l'axe d'articulation du bras d'essuie-glace et dont l'extrémité libre coulisse le long du bras d'essuie-glace lors de la course de pivotement du bras d'essuie-glace entre ses positions basse et haute et coopère avec des moyens de blocage du bras d'essuie-glace en position haute.

Le document FR-A-2.570.039 décrit et représente plusieurs modes de réalisation d'un balai d'essuie-glace du type mentionné précédemment dans lesquels l'extrémité libre de la béquille est reçue, en position haute, dans une pince élastique dans laquelle elle pénètre automatiquement lorsque l'utilisateur soulève le bras d'essuie-glace pour l'amener dans sa position haute de repos et hors de laquelle elle est extraite automatiquement lorsque l'utilisateur applique au bras d'essuie-glace un effort suffisant lui permettant de vaincre l'effort de verrouillage appliqué par la pince élastique sur le brin d' extrémité libre de la béquille.

Les différentes conceptions proposées dans ce document ne sont pas satisfaisantes dans la mesure où il existe un risque important de pivotement accidentel du bras d'essuie-glace, depuis sa position haute de repos vers sa position basse d'essuyage, si l'opérateur appuie accidentellement sur le bras d'essuie-glace.

Un tel risque n'est pas admissible dans la mesure où il peut aboutir à la rupture de la vitre à essuyer, et notamment du pare-brise, si le pivotement accidentel du bras d'essuie-glace se produit alors que l'extrémité libre du bras d'essuie-glace ne comporte pas de balai d'essuie-glace ou si ce dernier ne comporte pas de raclette d'essuyage, la rupture étant provoquée par le choc brutal d'un élément rigide agencé à l'extrémité de l'essuie-glace avec la surface à essuyer, ceci sous l'effet du rappel élastique puissant exercé par les ressorts qui appliquent normalement un couple d'essuyage important au bras d'essuie-glace.

Afin de remédier à ces inconvénients et notamment de supprimer tout risque de pivotement accidentel du bras d'essuie-glace, il a déjà été proposé, par exemple dans la demande de brevet DE-38 42 954, un essuie-glace dont les moyens de blocage de l'extrémité libre de la béquille comportent une surface transversale de butée contre laquelle l'extrémité libre de la béquille prend appui pour empêcher le pivotement du bras d'essuie-glace de sa position haute vers sa position basse.

Afin d'améliorer ce système, notamment pour faciliter le passage volontaire de la position haute à la position basse, la présente invention propose un essuie-glace caractérisé en ce que les moyens de blocage comportent un organe de commande positif du déblocage de l'extrémité libre de la béquille.

Selon divers modes de réalisation de l'invention :
- l'organe de commande positif du déblocage de l'extrémité libre de la béquille agit sur cette dernière pour l'éloigner de la surface transversale de butée ;
- l'essuie-glace comporte des moyens élastiques de rappel qui sollicitent l'extrémité libre de la béquille en contact avec une portion d'une surface interne en vis-à-vis du bras d'essuie-glace, et la surface de butée s'étend en saillie vers l'intérieur depuis la surface interne ;
- la portion de surface interne du bras d'essuie-glace comporte une rampe de franchissement de la surface de butée lorsque le bras d'essuie-glace pivote de sa position basse vers sa position haute ;
- l'organe de commande positive du déblocage de l'extrémité libre de la béquille agit sur cette dernière pour la solliciter en pivotement autour de son axe d'articulation à l'encontre de l'effort élastique de rappel exercé sur la béquille ;
- l'organe de commande positive du déblocage est un bouton de commandé lié à la béquille qui s'étend à travers une face supérieure du bras d'essuie-glace pour être accessible depuis l'extérieur du bras ;
- le bouton de commande comporte une tige qui traverse une lumière longitudinale formée dans la face supérieure du bras d'essuie-glace et dont une extrémité épaulée est reçue en coulissement dans une lumière longitudinale formée dans le corps de la béquille ;
- l'autre extrémité de la tige du bouton de commande est fixée sur la face interne d'un capot de commande qui recouvre une portion de ladite face supérieure du bras d'essuie-glace ;
- les moyens élastiques de rappel comportent au moins un ressort de traction dont une extrémité est fixée au corps de la béquille et dont l'autre extrémité est fixée au bras d'essuie-glace auquel il applique un couple qui le sollicite en pivotement autour de son axe d'articulation de sa position haute vers sa position basse.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en section par un plan longitudinal médian d'un essuie-glace réalisé conformément aux enseignements de l'invention et dont le bras d'essuie-glace est illustré en position basse d'essuyage;
- la figure 2 est une vue similaire à celle de la figure 1 sur laquelle le bras d'essuie-glace est illustré en position haute de repos ; et

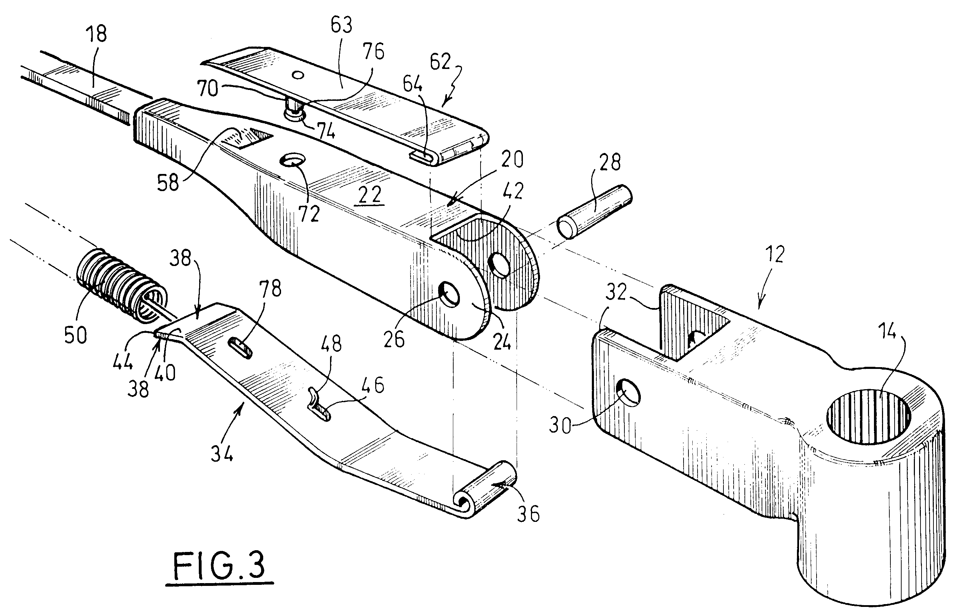

- la figure 3 est une vue en perspective éclatée des principaux composants de l'essuie-glace illustré aux figures 1 et 2.

L'essuie-glace 10 illustré sur les figures comporte une tête d'entraînement 12 en métal moulé qui comporte un alésage partiellement conique 14 qui est prévu pour recevoir l'extrémité libre d'un arbre (non représenté) d'entraînement en rotation de la tête 12 autour d'un axe X-X.

L'essuie-glace 10 comporte également un bras d'essuie-glace 16 constitué par un corps principal en forme de tige métallique plate 18 qui se prolonge à sa partie arrière, pour le raccordement avec la tête d'entraînement, par une partie arrière en forme de carter 20.

Le carter 20 est une pièce en tôle pliée dont la section transversale présente sensiblement la forme d'un U inversé et qui comporte un dos supérieur 22 et deux joues latérales parallèles 24 qui comportent des trous 26 alignés pour recevoir un pivot d'articulation 28.

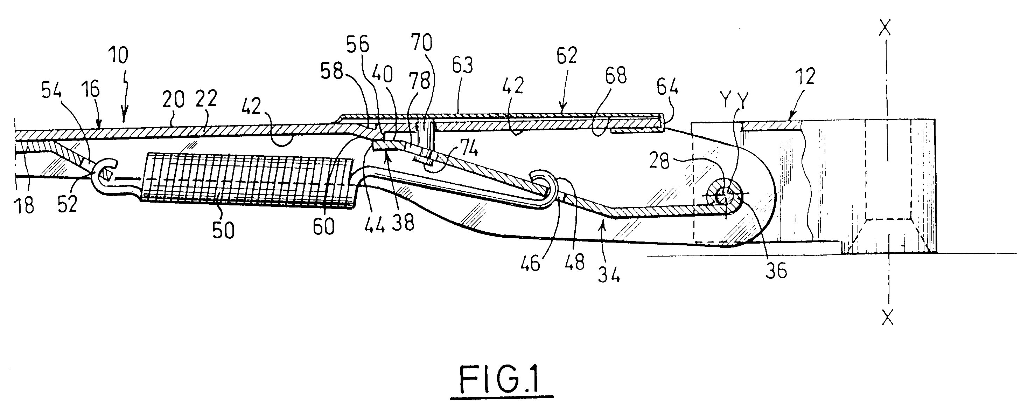

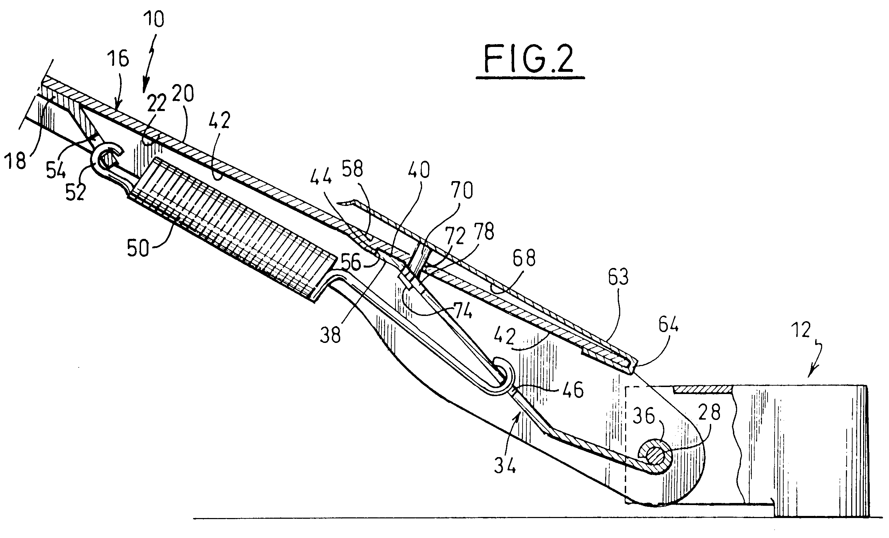

Le pivot d'articulation 28 est reçu à travers une paire de trous 30 formés dans des ailes latérales 32 de la tête d'entraînement de manière à assurer l'articulation du bras d'essuie-glace qui peut ainsi pivoter entre sa position basse illustrée à la figure 1 et sa position haute illustrée à la figure 2 autour de l'axe Y-Y qui est sensiblement perpendiculaire à l'axe X-X et à la direction générale longitudinale de l'essuie-glace.

Conformément à l'invention, l'essuie-glace 10 comporte une béquille 34 de soutien du bras d'essuie-glace 16 en position haute.

La béquille 34 est réalisée sous la forme d'une plaque en tôle pliée dont une première extrémité recourbée 36 est prévue pour être reçue entre les faces internes en vis-à-vis des ailes latérales 32 de la tête d'entraînement 12 et pour être traversée par le pivot 28 de manière que la béquille 34 soit montée pivotante par rapport à la tête d'entraînement 12 autour de l'axe Y-Y.

La seconde partie d'extrémité 38 de la béquille 34 délimite une face supérieure plane 40 qui est prévue pour coopérer en coulissement avec la surface interne en vis-à-vis 42 du dos 22 du bras d'essuie-glace 16.

La partie d'extrémité 38 délimite également un bord libre d'extrémité 44 qui s'étend transversalement, c'est-à-dire parallèlement à l'axe Y-Y et perpendiculairement à la direction longitudinale de l'essuie-glace.

La partie centrale de la béquille 34 comporte un trou 46 dans lequel est accrochée la première extrémité 48 d'un ressort hélicoïdal de traction 50 dont la seconde extrémité 52 est accrochée dans un trou 54 formé dans l'extrémité libre de la tige 18 du bras d'essuie-glace 16.

Le ressort de traction 50 applique, par l'intermédiaire de la béquille 34, un couple d'essuyage au bras d'essuie-glace 10 qui sollicite ce dernier en permanence autour de l'axe Y-Y dans le sens anti-horaire en considérant les figures.

Le ressort 50 exerce également un effort de rappel élastique sur la béquille 34 qui est tel que la face supérieure 40 de sa partie libre 38 soit sollicitée en permanence en contact avec la portion en vis-à-vis de la surface interne 42 du dos 22 du bras d'essuie-glace.

La surface interne 42 du dos 22 du bras d'essuie-glace 16 comporte une surface transversale de butée 56, qui est réalisée sous la forme d'un crevé, qui est susceptible de coopérer avec le bord transversal libre 44 de la béquille 34, comme cela est illustré sur la figure 2, pour constituer un dispositif de blocage du bras d'essuie-glace 16 en position haute.

La réalisation du crevé 58 permet de former simultanément une rampe 60 dans la surface interne 42 du dos 22 qui permet, en coopération avec la face supérieure 40 de l'extrémité 38 de la béquille 34, de permettre le franchissement de la surface transversale de butée 56 lorsque le bras d'essuie-glace 16 pivote depuis sa position basse vers sa position haute.

Afin de permettre le déblocage du bras d'essuie-glace en position haute, il est prévu un bouton 62 de commande positive du déblocage.

Le bouton 62 se présente essentiellement sous la forme d'une plaque de commande 64 qui recouvre en partie la face supérieure du dos 22 du bras d'essuie-glace 16 et dont l'extrémité arrière en forme de pince 64 est montée sur le bord arrière 66 du dos 22 pour assurer la fixation du bouton de commande 62 et son articulation par rapport au dos 22.

La face interne 68 de la plaque 63 comporte une tige de commande 70 qui s'étend transversalement en saillie à travers une lumière longitudinale 72 formée dans le dos 22.

L'extrémité libre de la tige 70 comporte un épaulement 74 qui délimite une portion amincie 76 qui est reçue dans une lumière 78 formée dans la partie avant de la béquille 34.

La plaque 63, par l'intermédiaire de la tige 70, est ainsi reliée à la béquille 34 dont elle peut commander les déplacements selon une direction sensiblement perpendiculaire au plan général du dos 22 du bras d'essuie-glace 16 pour l'éloigner de la face interne 42 du dos 22.

Lorsque l'utilisateur soulève le bras d'essuie-glace 16 depuis sa position basse illustrée à la figure 1, il provoque son pivotement autour de l'axe Y-Y à l'encontre de l'effort de rappel exercé par le ressort de traction 50.

Au cours de ce mouvement de pivotement, l'extrémité libre 38, 40 de la béquille 34 coulisse le long de la face interne 42 du dos 22 du bras d'essuie-glace 16, franchit la rampe 42 et la surface transversale de butée 56 pour passer en arrière de cette dernière, c'est-à-dire qu'elle effectue un déplacement relatif de la gauche vers la droite en considérant la figure 1.

Le franchissement du cran constitué par la rampe 60 et la surface transversale de butée 56 produit un déclic sonore perceptible par l'utilisateur qui lui indique qu'il a franchi la position haute et celui-ci relâche alors son effort de traction sur le bras 16.

Sous l'effet du ressort de rappel 50, le bras d'essuie-glace 16 s'immobilise dans sa position haute de repos illustrée à la figure 2 dans laquelle le bord d'extrémité libre 44 est en butée contre la surface transversale de butée 56 du crevé 58 et dans laquelle la face supérieure 40 de l'extrémité 38 de la béquille est en appui contre la surface interne 42 du dos 22.

Le bras d' essuie-glace 16 est alors parfaitement soutenu en position haute et un effort appliqué à l'extrémité du bras d'essuie-glace, par exemple lors des opérations de remplacement de la raclette d'essuyage, tendant à le faire pivoter vers sa position basse illustrée à la figure 1, est sans effet.

Lorsque l'utilisateur désire ramener l'essuie-glace en position d'essuyage, il applique un effort sur la face supérieure de la plaque 63 du bouton de commande 62 de manière à éloigner la béquille 34 du dos 22.

Cet effort a pour effet de provoquer un dégagement du bord d'extrémité libre 44 de la surface transversale de butée 56 qui permet à nouveau au bras d'essuie-glace 16 de pivoter autour de l'axe Y-Y, dans le sens anti-horaire en considérant les figures, sous l'action du ressort de traction 50, et ceci jusqu'à ce que l'essuie-glace soit à nouveau dans sa position d'essuyage illustrée à la figure 1.

L'invention, telle que revendiquée, pouvrait ne pas être limitée au mode de réalisation qui vient d'être décrit.

Il est notamment possible d'inverser mécaniquement l'agencement de la béquille, c'est-à-dire de l'articuler sur le bras d'essuie-glace et de prévoir une surface de butée sur la tête d'entraînement.

De même, il est possible de réaliser la butée transversale 56 sous la forme d'un élément monté mobile sur le bras d'essuie-glace et qui peut être escamoté, à l'encontre d'un ressort de rappel, pour libérer le bras d'essuie-glace en pivotement vers sa position basse.

## Revendications

1. Essuie-glace (10) de véhicule automobile, du type comportant un bras d'essuie-glace (16) monté articulé sur une tête d'entraînement (12) par l'intermédiaire d'un axe (Y-Y) sensiblement perpendiculaire à la direction longitudinale du bras d'essuie-glace (16) autour duquel (Y-Y) il peut pivoter entre une position basse d'essuyage et une position haute de repos et du type comportant une béquille (34) de soutien du bras d'essuie-glace (16) en position haute dont une extrémité (36) est montée articulée sur la tête d'entraînement (12) autour d'un axe (Y-Y) parallèle à l'axe d'articulation (Y-Y) du bras d'essuie-glace (16) et dont l'extrémité libre (38, 40, 44) coulisse le long du bras d'essuie-glace (16, 20, 22, 42) lors de la course de pivotement du bras d'essuie-glace entre ses positions basse et haute et coopère avec des moyens de blocage du bras d'essuie-glace (16) en position haute, ces moyens de blocage comportant une surface transversale de butée (56) contre laquelle l'extrémité libre (44) de la béquille (34) prend appui pour empêcher le pivotement du bras d'essuie-glace (16) de sa position haute vers sa position basse caractérisé en ce que lesdits moyens de blocage comportent en outre un organe (62) de commande positive du déblocage de l'extrémité libre (44) de la béquille (34).

2. Essuie-glace selon la revendication 1, caractérisé en ce que l'organe de commande positive (62) du déblocage de l'extrémité libre (44) de la béquille (34) agit sur cette dernière pour l'éloigner de la surface transversale de butée (56).

3. Essuie-glace selon l'une des revendications 1 ou 2, caractérisé en ce qu'il comporte des moyens élastiques de rappel (50) qui sollicitent l'extrémité libre (38, 40) de la béquille (34) en contact avec une portion d'une surface interne (42) en vis-à-vis du bras d'essuie-glace (16, 22), et en ce que la surface de butée (56) s'étend en saillie vers l'intérieur depuis ladite surface interne (42).

4. Essuie-glace selon la revendication 3, caractérisé en ce que la portion de surface interne (42) du bras d'essuie-glace (10) comporte une rampe (60) de franchissement de la surface de butée transversale (56) lorsque le balai d'essuie-glace (16) pivote de sa position basse vers sa position haute.

5. Essuie-glace selon l'une des revendications 3 ou 4, caractérisé en ce que l'organe (62) de commande positive du déblocage de l'extrémité libre de la béquille (34) agit sur cette dernière pour la solliciter en pivotement autour de son axe d'articulation (Y-Y) à l'encontre de l'effort élastique de rappel exercé sur la béquille (34).

6. Essuie-glace selon la revendication 5, caractérisé en ce que l'organe (62) de commande positive du déblocage est un bouton de commandé lié à la béquille (34) qui s'étend à travers une face supérieure (22, 72) du bras d'essuie-glace (16, 20, 22) pour être accessible depuis l'extérieur du bras.

7. Essuie-glace selon la revendication 6, caractérisé en ce que le bouton de commande (62) comporte une tige (70) qui traverse une lumière longitudinale (72) formée dans la face supérieure (22) du bras d'essuie-glace (16, 20) et dont une extrémité épaulée (74, 76) est reçue en coulissement dans une lumière longitudinale (78) formée dans le corps de la béquille (34).

8. Essuie-glace selon la revendication 7, caractérisé en ce que l'autre extrémité de la tige (70) du bouton de commande (62) est fixée sur la face interne (68) d'un capot de commande (63) qui recouvre une portion de ladite face supérieure (22) du bras d'essuie-glace.

9. Essuie-glace selon l'une quelconque des revendications 3 à 8, caractérisé en ce que les moyens élastiques de rappel comportent au moins un ressort de traction (50) dont une extrémité (48) est fixée au corps de la béquille (34) et dont l'autre extrémité (52) est fixée au bras d'essuie-glace (16, 18) auquel il applique un couple qui le sollicite en pivotement autour de son axe d'articulation (Y-Y) de sa position haute vers sa position basse.

## Claims

1. Windscreen wiper (10) for a motor vehicle, of the type having a windscreen wiper arm (16) pivotally mounted on a drive head (12) by means of a shaft (Y-Y) substantially perpendicular to the longitudinal direction of the windscreen wiper arm (16) about which (Y-Y) it can pivot between a low wiping position and a high idle position and of the type having a stay (34) to support the windscreen wiper arm (16) in the high position, one end of which (36) is pivotally mounted on the drive head (12) about a shaft (Y-Y) parallel to the pivot shaft (Y-Y) of the windscreen wiper arm (16) and whose free end (38, 40, 44) slides along the windscreen wiper arm (16, 20, 22, 42) during the pivoting travel of the windscreen wiper arm between its high and low positions and cooperates with means of locking the windscreen wiper arm (16) in the high position, these locking means having a transverse stop surface (56) against which the free end (44) of the stay (34) bears in order to prevent the windscreen wiper arm (16) from pivoting from its high position to its low position, characterised in that the said locking means also include a device (62) for the positive control of the unlocking of the free end (44) of the stay (34).

2. Windscreen wiper according to Claim 1, characterised in that the positive control device (62) for the unlocking of the free end (44) of the stay (34) acts on the latter to move it away from the transverse stop surface (56).

3. Windscreen wiper according to one of Claims 1 or 2, characterised in that it includes elastic return means (50) which force the free end (38, 40) of the stay (34) in contact with a portion of an opposite internal surface (42) of the windscreen wiper arm (16, 22), and in that the stop surface (56) extends projecting inwards from the said internal surface (42).

4. Windscreen wiper according to Claim 3, characterised in that the internal surface portion (42) of the windscreen wiper arm (10) has a passing slope (60) for the transverse stop surface (56) when the windscreen wiper blade (16) pivots from its low position to its high position.

5. Windscreen wiper according to one of Claims 3 or 4, characterised in that the positive control device (62) for the unlocking of the free end of the stay (34) acts on the latter to force it pivotally about its pivot shaft (Y-Y) counter to the elastic return force exerted on the stay (34).

6. Windscreen wiper according to Claim 5, characterised in that the positive unlocking control device (62) is a control button connected to the stay (34) which extends through an upper face (22, 72) of the windscreen wiper arm (16, 20, 22) so as to be accessible from the outside of the arm.

7. Windscreen wiper according to Claim 6, characterised in that the control button (62) has a rod (70) which passes through a longitudinal orifice (72) formed in the upper face (22) of the windscreen wiper arm (16, 20) and one shouldered end of which (74, 76) is slidably received in a longitudinal orifice (78) formed in the body of the stay (34).

8. Windscreen wiper according to Claim 7, characterised in that the other end of the rod (70) of the control button (62) is fixed on the internal face (68) of a control cover (63) which covers a portion of the said upper face (22) of the windscreen wiper arm.

9. Windscreen wiper according to any one of Claims 3 to 8, characterised in that the elastic return means include at least one draw spring (50), one end (48) of which is fixed to the body of the stay (34) and the other end of which (52) is fixed to the windscreen wiper arm (16, 18) to which it applies a torque which forces it pivotally about its pivot shaft (Y-Y) from its high position to its low position.

## Patentansprüche

1. Scheibenwischer (10) für Kraftfahrzeuge, umfassend einen Scheibenwischerarm (16), der schwenkbar an einem Antriebskopf (12) mittels einer in etwa senkrecht zur Längsrichtung des Scheibenwischerarms (16) angeordneten Achse (Y-Y) gelagert ist, um die er zwischen einer unteren Wischposition und einer oberen Ruheposition geschwenkt werden kann, sowie eine Stützleiste (34) zur Abstützung des Scheibenwischerarms (16) in seiner oberen Position, von der ein Ende (36) am Antriebskopf (12) schwenkbar um eine parallel zur Gelenkachse (Y-Y) des Scheibenwischerarms (16) angeordnete Achse (Y-Y) gelagert ist und deren freies Ende (38, 40, 44) bei der Schwenkbewegung des Scheibenwischerarms zwischen seiner oberen und unteren Position am Scheibenwischerarm (16, 20, 22, 42) entlang gleitet und mit Sperrmitteln zur Sperrung des Scheibenwischerarms (16) in seiner oberen Position zusammenwirkt , wobei diese Sperrmittel eine Queranschlagfläche (56) umfassen, an der das freie Ende (44) der Stützleiste (34) zur Anlage kommt, um die Schwenkbewegung des Scheibenwischerarms (16) von seiner oberen Position zu seiner unteren Position zu verhindern, **dadurch gekennzeichnet**, daß die besagten Sperrmittel außerdem ein Organ (62) zur positiven Betätigung der Freigabe des freien Endes (44) der Stützleiste (34) umfassen.

2. Scheibenwischer nach Anspruch 1 , **dadurch gekennzeichnet,** daß das Organ (62) zur positiven Betätigung der Freigabe des freien Endes (44) der Stützleiste (34) auf diese einwirkt, um sie von der Queranschlagfläche (56) zu entfernen.

3. Scheibenwischer nach einem der Ansprüche 1 oder 2, **dadurch gekennzeichnet,** daß er elastische Rückstellmittel (50) umfaßt, die das freie Ende (38, 40) der Stützleiste (34) in Kontakt mit einem Teilstück einer gegenüberliegenden Innenfläche (42) des Scheibenwischerarms (16, 22) beaufschlagen, und daß sich die Anschlagfläche (56) von der besagten Innenfläche (42) aus vorspringend nach innen erstreckt.

4. Scheibenwischer nach Anspruch 3 , **dadurch gekennzeichnet,** daß das Teilstück der Innenfläche (42) des Scheibenwischerarms (16) eine Schräge (60) zur Überwindung der Queranschlagfläche (56) umfaßt, wenn der Scheibenwischerarm (16) von seiner unteren Position zu seiner oberen Position schwenkt.

5. Scheibenwischer nach einem der Ansprüche 3 oder 4, **dadurch gekennzeichnet,** daß das Organ (62) zur positiven Betätigung der Freigabe des freien Endes der Stützleiste (34) auf diese einwirkt, um sie in einer Schwenkbewegung um ihre Gelenkachse (Y-Y) entgegen der auf die Stützleiste (34) ausgeübten elastischen Rückstellkraft zu beaufschlagen.

6. Scheibenwischer nach Anspruch 5 , **dadurch gekennzeichnet,** daß das Organ (62) zur positiven Betätigung der Freigabe ein mit der Stützleiste (34) verbundener Betätigungsknopf ist, der sich durch eine Oberseite (22, 72) des Scheibenwischerarms (16, 20, 22) hindurch erstreckt, um von der Außenseite des Scheibenwischerarms aus zugänglich zu sein.

7. Scheibenwischer nach Anspruch 6 , **dadurch gekennzeichnet,** daß der Betätigungknopf (62) einen Stift (70) umfaßt, der durch ein Langloch (72), das in die Oberseite (22) des Scheibenwischerarms (16, 20) eingearbeitet ist, hindurchgeht und von dem ein abgestuftes Ende (74, 76) verschiebbar in ein Langloch (78) eingesetzt ist, das in den Körper der Stützleiste (34) eingarbeitet ist.

8. Scheibenwischer nach Anspruch 7 , **dadurch gekennzeichnet,** daß das andere Ende des Stifts (70) des Betätigungsknopfes (62) an der Innenseite (68) einer Betätigungskappe (63) befestigt ist, die ein Teilstück der besagten Oberseite (22) des Scheibenwischerarms abdeckt.

9. Scheibenwischer nach einem der Ansprüche 3 bis 8, **dadurch gekennzeichnet,** daß die elastischen Rückstellmittel mindestens eine Zugfeder (50) umfassen, von der ein Ende (48) am Körper der Stützleiste (34) befestigt ist und deren anderes Ende (52) am Scheibenwischerarm (16, 18) befestigt ist, auf den sie ein Moment ausübt, das ihn in einer Schwenkbewegung um seine Gelenkachse (Y-Y) von seiner oberen Position zu seiner unteren Position beaufschlagt.
